# EUROPEAN PATENT APPLICATION

(11) **EP 1 265 369 A1**
(43) Date of publication of application: **11.12.2002**
(21) Application number: 01114031.6
(22) Date of filing: 08.06.2001
(51) Int. Cl.: H04B 1/38, H01Q 1/24

(54) **Mobile telephone using a movable antenna**

(71) Applicant: Sony International (Europe) GmbH, 10785 Berlin (DE)
(72) Inventor: Takao, Nobutaka, Sony International (Europe) GmbH, Heisenbergbogen 1, 85609 Ascheim (DE)
(74) Representative: Körber, Martin, Dipl.-Phys.

(57) **Abstract**

The present invention relates to a mobile terminal (1) for a wireless communication system, comprising an antenna (2) for providing an air-interface for data communication between the mobile terminal (1) and a base station via radio waves, whereby the antenna (2) is located at the backside of the mobile terminal (1), and the antenna (2) is movable between an retracted position and an extracted position, and a switching means (11) which is operated by means of the antenna (2), whereby a communication is initiated by the switch upon moving the antenna to the extracted position and the communication is terminated by the switch upon moving the antenna to the retracted position.

## Description

The present invention relates to a mobile terminal for a wireless telecommunication system, like a mobile telephone for the Global System for Mobile Telecommunication (GSM) or the Universal Mobile Telephone System (UMTS).

For transmitting data between a mobile terminal and a base station over an air-interface via radio waves, the mobile terminal comprises an antenna. This antenna is mostly fixedly to the casing of the mobile terminal.

Due to the technological development, mobile terminals, particularly mobile telephones, become smaller and smaller. The antenna, however, has a predetermined size, which usually depends on the transmitting/receiving frequency of the radio waves. Thus, the antenna often sticks out from the mobile terminal, which is space consuming and therefore troublesome for a user, e.g. during carrying the mobile telephone in a bag or in a pocket of a jacket, even when the mobile terminal is not in use or the mobile terminal is in stand-by mode.

Further mobile telephones are known, in which the antenna is mounted inside the casing of the mobile telephone. However, the electronic inside the casing damps the power of the radio waves, so that the quality of transmitting and receiving data is reduced. Further, in this solution the radio waves may be shielded by the hand of the user holding the mobile terminal to his or her ear.

It is therefore the object of the present invention to provide a mobile terminal for a wireless telecommunication system comprising an antenna, which is located so that a good reception and transmission quality is ensured and which is not troublesome for a user.

The above object is achieved by a mobile terminal for a wireless telecommunication system according to claim 1.

The mobile terminal for a wireless communication system comprises an antenna for providing the air-interface for data communication between the mobile terminal and a base station via radio waves, whereby the antenna is located at the back side of the mobile terminal.

Thereby, the antenna is mounted movable between a retracted position and an extracted position. The mobile terminal according to the present invention further comprises a switching means, which is operated by means of the antenna so that a communication is initiated upon moving the antenna to the extracted position, and the communication is terminated upon moving the antenna to the retracted position.

During a telephone call, the mobile telephone is normally held by a user in a way, that the loudspeaker is close to the user's ear and the microphone is close to the user's mouth. Thereby, the side at which the loudspeaker and the microphone are located, is defined as the front side of the mobile telephone. Further, the loudspeaker is located inside the upper part and the microphone is located inside the lower part of the mobile telephone.

So it is noted, that particulars related to a direction, e.g. back side, front side, upper part, lower part, etc. relates to a direction of the mobile terminal, in which such a mobile terminal is normally used during a telephone call.

The advantage of the present invention is, that the antenna is hidden inside the mobile terminal, when the mobile terminal is switched off or in stand-by mode, i.e. when no data communication (e.g. during a telephone call) is performed. Thus, the required space, e.g. during carrying the mobile terminal in a pocket, is reduced as compared to an antenna, which is fixedly extending from the casing of the mobile terminal.

Further, the radiation influence to the human body can be reduced by a moving antenna according to the present invention.

Also further, since the switching means for initiating and terminating a communication is automatically operated by the antenna, the user of the mobile terminal does not have to operate a key (communication start/end key) simultaneously to the movement of the antenna for initiating/terminating a telephone call.

In one embodiment of the present invention, the antenna is adapted to be moved manually from the retracted position to the extracted position by a user. In this embodiment, the mobile terminal comprises a holding means for holding the antenna in the retracted position and in the extracted position, respectively.

In an other embodiment of the present invention, the antenna is moved automatically from the retracted position to the extracted position upon the operation of a predetermined key. Thereby, the mobile terminal comprises a spring for moving the antenna to the extracted position and a fastening means for fastening the antenna in the retracted position.

Thereby, the antenna (or the casing comprising the antenna, respectively) is moved by means of a spring to the extracted position. Thereby, the spring is both connected with the antenna and the casing of the mobile terminal. The spring is depressed, when the antenna is located in the retracted position, and the antenna is held by a fastening means, which is e.g. formed like a hook.

When operating the predetermined key, the fastening means disengages the antenna (or the casing comprising the antenna, respectively) and the antenna moves to the extracted position by means of the spring. The antenna is held in the extracted position also by means of the spring.

To move the antenna back into the retracted position, the user of the mobile terminal has to push the antenna by depressing the spring until the antenna is engaged by the fastening means.

The mobile terminal further comprises a sliding means for guiding the antenna between the retracted position and the extracted position towards a longitudinal axis.

The antenna can be located either at the upper part or at the lower part of the mobile terminal.

Advantageously, the antenna is located in a separate, movable casing, so that the antenna (in the casing) is a part of the casing of the mobile terminal, when the antenna resides in the retracted position.

For transmitting data, the antenna has to be electrically contacted with the mobile terminal and the electronic circuit inside the mobile terminal, respectively. The electrical contact between the electronic circuit and the antenna can e.g. be established by a flexible wire, advantageously a flexible coaxial cable, a spring contact or by the sliding means itself.

The antenna can either be a patch antenna, a wire antenna or a strip antenna.

In the following description a preferred embodiment of the present invention is explained in more detail in relation to the enclosed drawings, in which
Fig. 1 shows the front view of a mobile terminal according to the present invention with an extracted antenna,
Fig. 2a, 2b show the rear and side view of a mobile terminal according to the present invention, whereby the antenna is situated in the retracted position,
Fig. 3a, 3b show the rear and side view of a mobile terminal according to the present invention, whereby the antenna is situated in the extracted position,
Fig. 4a to 4d show a mobile terminal according to the present invention, whereby the antenna is located at the lower part of the mobile telephone,
Fig. 5 shows a mobile terminal according to an other embodiment of the present invention, and
Figs. 6 to 11 show further examples of the movement of the antenna according to the present invention.

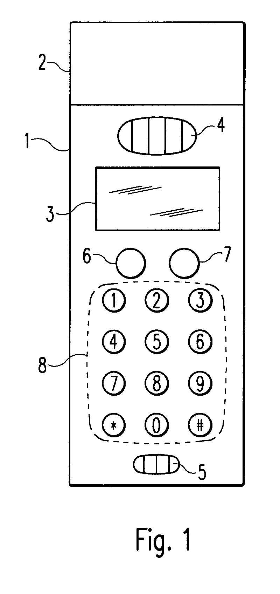

Fig. 1 shows the front view of a mobile terminal 1 (further called mobile telephone 1) with an extracted antenna 2 according to the present invention.

The mobile telephone 1 further comprises a loudspeaker 4 and a microphone 5 for outputting and receiving speech to and from a user, a communication start key 6 for starting a telephone call, a menu key 7 for selecting menu items and alphanumeric keys 8 for inputting e.g. a telephone number.

The mobile telephone can further comprise inputting means like a jog dial or other operating keys, which are not shown since they are irrelevant for the understanding of the present invention.

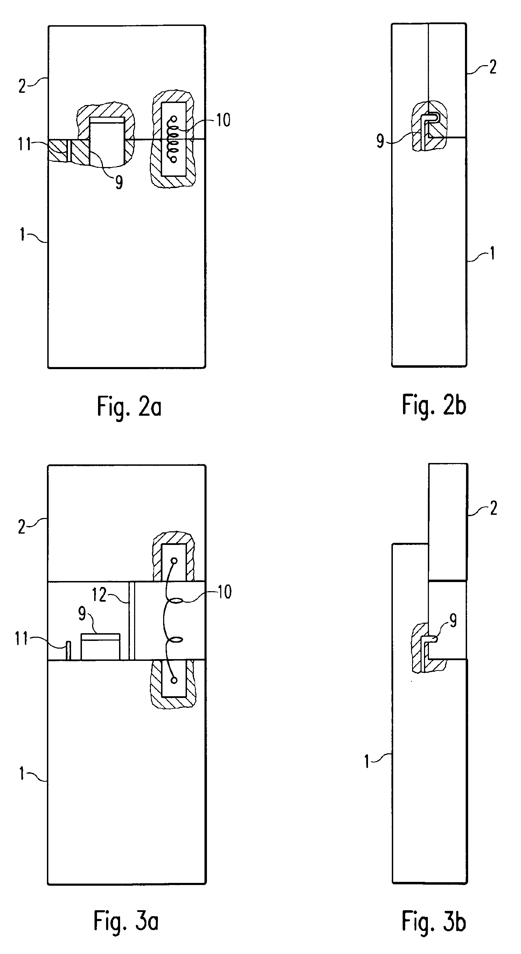

Fig. 2a shows the back view and Fig. 2b the side view of a mobile telephone 1 according to the present invention, with an antenna 2, which is located in the retracted position. Thereby, the antenna 2 is located in a casing, which forms in the retracted position one unit with the casing of the mobile telephone 1. In this embodiment of the present invention, the antenna 2 is moved into the extracted position by means of a spring 10, which is e.g. a coil spring.

In the following description, the casing comprising the antenna 2 is simply called antenna 2. Further, the antenna 2 is located behind the loudspeaker (loudspeaker 4 shown in Fig. 1).

As shown in Figs. 2a and 2b, the spring 10 is both connected to the antenna 2 and the casing of the mobile terminal 1. In the retracted position of the antenna 2, the spring 10 is depressed (Fig. 2a). In order to avoid that the antenna 2 moves inadvertently from the retracted position to the extracted position by means of the depressed spring 10, a fastening means 9 holds the antenna 2 in the retracted position. The fastening 9 means is e.g. formed of a versatile hook, which is hooked into a suitable notch of the antenna 2.

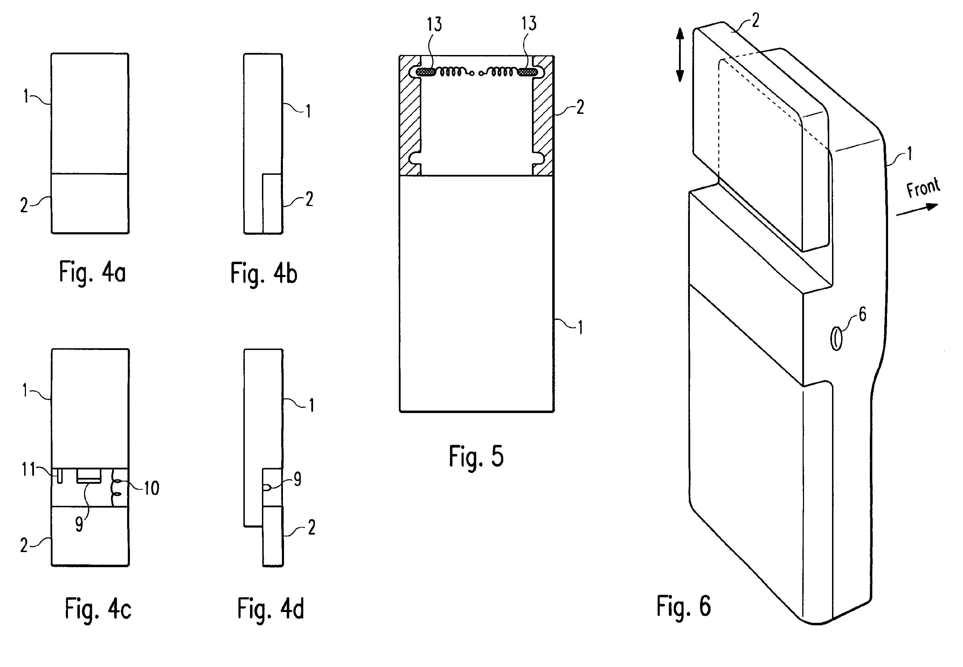

To move the antenna 2 into the extracted position, the user operates a predetermined key (e.g. the communication start key 6 as shown in Fig. 6) of the mobile telephone 1. The predetermined key is mechanically or electrically connected to the fastening means 9 in a way, that the fastening means 9 is pulled back from the notch of the antenna 2 upon the operation of the predetermined key, so that the antenna 2 is disengaged.

After disengaging, the antenna 2 is moved to the extracted position by force of the depressed spring 10. Thereby, the spring 10 relaxes partially during moving into the extracted position, and the antenna 2 is held in the extracted position also by force of the spring.

Fig. 2a shows further an electrical switch 11, which indicates a so-called off-hook and on-hook situation, respectively, of the mobile telephone 1, i.e. if the antenna 2 is moved into the extracted position, the switch 11 initiates a communication, e.g. a telephone call or a data transmission (e.g. SMS message), and if the antenna 2 is moved into the retracted position, the switch 11 terminates the communication.

Therefore, the switch 11 is fixed in relation to the casing of the mobile telephone 1 unmovable, whereby a movable part of the switch 10 is actuated by the moving of the antenna 2. Advantageously, the switch 11 is a push-button, which does not rest into a predetermined position, i.e. the switch 11 does not rest in a switch-on or switch-off state.

The switch is electrically connected to electronic circuitry on a printed circuit board (not shown) of the mobile telephone 1. The electrical contact is closed, when a communication is initiated, and opened, when the communication is terminated (or vice versa). The opening/closing of the electrical contact is thereby registered by the electronic circuitry, whereafter the respective function (initiate or terminate a communication) is activated.

At the end of the communication, the user pushes the antenna 2 back into the retracted position, whereby the switch 11 terminates the communication (on-hook situation), the fastening means 9 snaps into the notch of the antenna 2 to engage the antenna 2 in the retracted position and the spring 10 is depressed again. The fastening means 9 is e.g. flexible or is also connected with a further spring (not shown), so that the fastening means is snapped into the notch by force of the flexible material or the further spring.

Since the mobile telephone comprises a switch 11 (as described), which terminates a communication by moving the antenna 2 into the retracted position, the usual communication end key is not necessary.

Fig. 3a shows the rear view and Fig. 3b shows the side view of the mobile telephone 1 according to the embodiment of the present invention as described in Figs. 2a and 2b. The antenna 2 is moved to the extracted position; the foregoing numbering of the parts is maintained.

Thereby, the antenna 2 is held in the extracted position by means of the expanded spring 10 until the antenna 2 is pushed manually into the retracted position by the user.

Fig. 3a shows further an example of the guiding of the antenna 2. Thereby, the antenna 2 is guided by a sliding means 12, e.g. slide rails. The sliding means 12 can further be realised by or in side walls of the casing of the mobile telephone 1 and/or by or in side walls of the casing of the antenna 2.

Fig. 4a to 4d show another embodiment of the present invention, whereby the antenna 2 is located at the lower part of the mobile telephone 1 behind the keys 8 (cf. of Fig. 1)

Thereby, Fig. 4a and 4b show the antenna 2 in the retracted position and Fig. 4c and 4d show the antenna in the extracted position. Since the parts and the functionality of the antenna 2 is identical to the mobile telephone as shown in Fig. 2a, 2b, 3a, 3b, the functionality is not explained again.

Fig. 5 shows an embodiment of the present invention, in which the antenna 2 is adapted to be moved into the extracted position and retracted position only manually instead by means of the spring 10; the antenna 2 is shown in the retracted position. The antenna is both held in the retracted position and in the extracted position by means of holding means 13, which rests into suitable notches of the antenna 2. The holding means 13 are advantageously rounded pins, which are movable fasten at springs; the springs are at one end connected with the casing of the mobile telephone 1.

The rounded pins are pressed into the notches by means of springs. When the antenna 2 is manually moved into the extracted position (or retracted position, respectively), a force operates on the rounded pins. On exceeding a predetermined force, which is dependent of the spring-strength, the pins are pushed out of the notches. When the extracted position (or retracted position, respectively) is reached, the pins are resting into notches at the other end of the antenna 2.

Thus, the holding means 13 protect the antenna 2 from an unmeant movement, i.e. from an unmeant initiating or terminating a telephone call.

The mobile telephone 1 comprises in this embodiment of the present invention also the switching means 11; however, the fastening means 9 and the spring 10 are not necessary.

Further, if the movement of the antenna 2 is done exclusive manually, i.e. without the force of a spring into the extracted position, the communication start key 6 is also not necessary, since a communication is initiated by means of the switch 11 upon manually moving of the antenna 2 into the extracted position.

Figs. 6 to 11 show further examples of a mobile telephone 1 according to the present invention.

Fig. 6 shows a spatial view of the mobile telephone 1 as described in relation to Figs. 2a, 2b, 3a and 3b. Thereby, a predetermined key 6, for disengaging the antenna, which is equal to the communication start key 6 as shown in Fig. 1, is located sidewards of the mobile telephone 1.

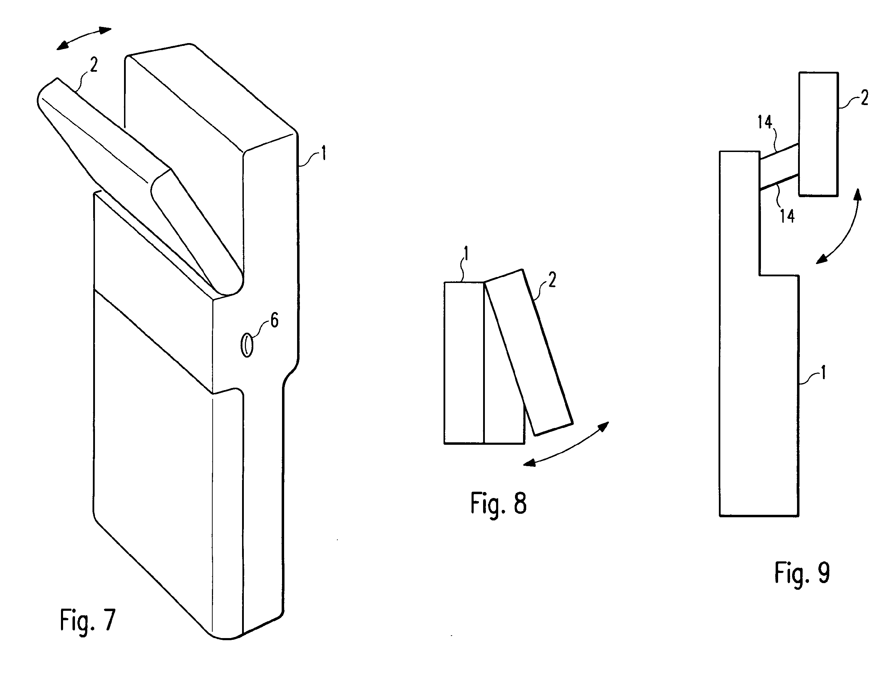

Fig. 7 shows the side view of a mobile telephone 1, wherein the antenna 2 can be pivoted. In this embodiment, the antenna can be swayed backwards out of the mobile telephone 1 into the extracted position.

The antenna 2 is thereby pivoted at its upper or lower side; the respective other side of the antenna 2 is movable from the mobile telephone away into the extracted position, whereby the angle of the movement of the antenna 2 between the retracted position and extracted position is e.g. 45 degrees.

Fig. 8 shows the view from above of a mobile telephone 1, wherein the antenna 2 is also pivoted. In this embodiment, the antenna 2 is pivoted sideways, so that the antenna 2 is swayed sidewards to the left or right side of the mobile telephone 1 into the extracted position.

The angle of the movement of the antenna 2 in relation to the casing can also be limited to e.g. 45 or 90 degrees.

In the embodiment of the present invention as shown in Fig. 9, the antenna 2 is mechanically connected to the casing of the mobile telephone by means of pivoted arms 14.

The arms 14 are respectively connected pivoted both to the casing of the mobile telephone 1 and the casing of the antenna 2. Further, there are at least two arms 14, which are arranged parallel to each other. This kind of connection enables to guide the antenna from the retracted position to the extracted position (and vice versa) and to keep the antenna 2 in the retracted position and in the extracted position, respectively, parallel to the casing of the mobile terminal 1.

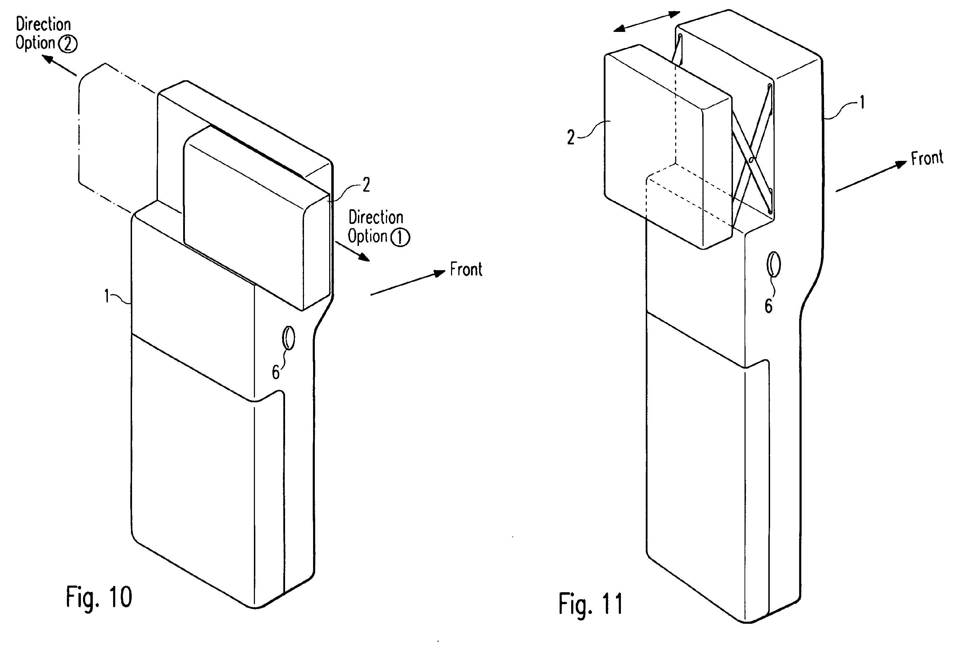

Fig. 10 shows a spatial view of a mobile telephone 1, wherein the antenna 2 can be moved sidewards. Thereby, the movement can be either happen rightwards (direction option 1) and/or leftwards (direction option 2).

In the embodiment of the present invention as shown in Fig. 11, the antenna 2 is mechanically connected to the casing of the mobile telephone by means of pivoted arms similar to the embodiment as shown in Fig. 9.

The arms are likewise connected pivoted both to the casing of the mobile telephone 1 and the casing of the antenna 2, so that a movement of the antenna 2 parallel to the casing of the mobile telephone 1 is enabled. The difference to the example of Fig. 9 is, that the movement of the antenna 2 can happen just vertical in direction to the casing, so that the antenna 2 is distanced from the casing in the extracted position.

In the shown embodiments of the present invention the antenna 2 can be moved into the extracted position either by means of a spring or manually by a user as described in the embodiments above. In the case of the movement forced by a spring, the mobile telephone further comprises the predetermined key 6.

The present invention has the advantage, that the antenna 2 needs no additional space if not necessary, e.g. during carrying in a jacket while the mobile telephone 1 operates in the stand-by mode. Further, the radio waves are not shielded by the user's hand during a communication, since the antenna 2 is extracted during this time.

Further, the radiation influence to the human body can be reduced by a moving antenna, since the antenna 2 can moved away from the head of the user.

## Claims

1. Mobile terminal (1) for a wireless communication system, comprising
an antenna (2) for providing an air-interface for communication between the mobile terminal (1) and a base station via radio waves, whereby the antenna (2) is located at the backside of the mobile terminal (1) and the antenna (2) is movable between a retracted position and an extracted position, and
a switching means (11) which is operated by means of the antenna (2), so that a communication is initiated upon moving the antenna to the extracted position and the communication is terminated upon moving the antenna to the retracted position.

2. Mobile terminal (1) according to claim 1,
**characterised in**
**that** the antenna (2) is adapted to be moved manually from the retracted position to the extracted position by a user.

3. Mobile terminal (1) according to claim 2,
**characterised by**
a holding means (13) for holding the antenna (2) in the retracted position and in the extracted position, respectively.

4. Mobile terminal (1) according to claim 1,
**characterised in**
**that** the antenna (2) is adapted to be moved automatically from the retracted position to the extracted position upon the operation of a predetermined key.

5. Mobile terminal (1) according to claim 4,
**characterised by**
a spring (10) for moving the antenna (2) to the extracted position.

6. Mobile terminal (1) according to claim 4 or 5,
**characterised by**
a fastening means (9) for fastening the antenna (2) in the retracted position.

7. Mobile terminal (1) according to one of the claims 1 to 6,
**characterised by**
a sliding means (12) for guiding the antenna (2) between the retracted position and the extracted position towards a longitudinal axis.

8. Mobile terminal (1) according to claim 7,
**characterised in**
**that** an electrical contact between the antenna (2) and the mobile terminal (1) is established by the sliding means (12).

9. Mobile terminal (1) according to one of the claims 1 to 7,
**characterised in**
**that** an electrical contact between the antenna (2) and the mobile terminal (1) is established by a flexible wire.

10. Mobile terminal (1) according to one of the claims 1 to 9,
**characterised in**
**that** the antenna (2) is located at the upper part of the mobile terminal (1).

11. Mobile terminal (1) according to one of the claims 1 to 9,
**characterised in**
**that** the antenna (2) is located at the lower part of the mobile terminal (1).

12. Mobile terminal (1) according to one of the claims 1 to 11,
**characterised in**
**that** the antenna (2) is located in a movable casing.

13. Mobile terminal (1) according to one of the claims 1 to 12,
**characterised in**
**that** the antenna (2) is a patch antenna.

14. Mobile terminal (1) according to one of the claims 1 to12,
**characterised in**
**that** the antenna (2) is a wire antenna.

15. Mobile terminal (1) according to one of the claims 1 to 12,
**characterised in**
**that** the antenna (2) is a strip antenna.
